# EUROPEAN PATENT SPECIFICATION

(11) **EP 0 749 567 B1**
(45) Date of publication and mention of the grant of the patent: **22.10.1997**
(21) Application number: 95910621.2
(22) Date of filing: 06.03.1995
(51) Int. Cl.: G01N 1/36, B01D 3/34

(54) **TISSUE PROCESSING**
GEWEBEVERARBEITUNG
TRAITEMENT DE TISSUS BIOLOGIQUES

(30) Priority: 10.03.1994 GB 9404730
(43) Date of publication of application: 27.12.1996
(73) Proprietor: LIFE SCIENCES INTERNATIONAL (EUROPE) LIMITED, Runcorn, Cheshire WA7 1PR (GB)
(72) Inventor: WALTON, George, Alan, Cheshire CW6 0BU (GB)
(74) Representative: Howden, Christopher Andrew
(86) International application number: GB9500480
(87) International publication number: WO9524628

(56) References cited:
- EP-A- 0 077 477
- EP-A- 0 269 316
- DE-A- 2 932 112
- DE-A- 3 209 841
- GB-A- 780 799
- GB-A- 782 735
- US-A- 4 285 775

## Description

THIS INVENTION relates to tissue processing, that is to say, the processing of histological and like tissue specimens by sequential treatment with a series of processing fluids. The invention is especially applicable to tissue processing using apparatus of the kind comprising a single processing chamber for the reception of one or more tissue specimens and to which processing fluids are supplied, in turn, for the sequential treatment of the tissue specimens therein with such fluids. However, certain aspects of the invention are also applicable to tissue processing by the use of apparatus in which tissue specimens are immersed sequentially in processing fluids held in individual vessels to which the tissue specimens are introduced in sequence by a transfer mechanism. An example of single processing chamber apparatus to which the invention is particularly applicable is disclosed in EP-A-0 077 477, whereas an example of the latter kind of tissue processing apparatus is disclosed in EP-A-0 269 316.

In tissue processing in which the specimens are subjected progressively to fixation, dehydration, clearing and impregnation and embedding in wax for subsequent sectioning, the wax impregnation stage requires a volume of molten paraffin wax and problems arise in connection with the provision of this volume of molten wax. One problem relates to the requirement to melt an initially solid charge of wax to provide the required volume of molten wax before the apparatus can be put into use, and thereafter to maintain the wax at the required temperature during continued operation of the apparatus. A second problem concerns contamination of the wax with other processing fluids carried by or impregnating the specimens at the time when these are brought into contact with the wax. In the single chamber apparatus, there is the further problem of maintaining the temperature of the molten wax while in the processing chamber.

In the single chamber apparatus there is additionally the problem of maintaining homogeneity of the wax volume in the processing chamber while specimens therein are being impregnated with wax by exchange with other processing fluids in the specimen. This particular problem is also evident in the treatment of the specimens with other processing fluids in a single chamber apparatus but is particularly acute in the case of the molten wax that is more viscous than the other processing fluids so that diffusion is slower.

Melting the wax in its container and thereafter maintaining the wax at the appropriate temperature is normally accomplished by use of electrical heating plates or coils in the wax container. While such arrangements are acceptably efficient for maintaining the temperature of the wax when once molten because convection currents distribute heat in the molten mass, the low thermal conductivity of solid wax impedes the transfer of heat from such plates or coils, so that melting can only be accomplished relatively slowly. This problem is exacerbated by the fact that the solid wax as charged into the wax container is usually in granular or large particulate form, impeding heat flow through its mass.

The contamination problem is usually addressed by providing two or more volumes of molten wax in discrete containers that are used in sequence during the wax impregnation stage so that the major contamination is restricted to the first-used volume of wax that is eventually discarded and substituted by the less contaminated second-used volume that is in turn replaced with fresh wax or a later-used wax volume as the case might be.

In single chamber apparatus, an electrical heater is usually provided for controlled heating of the processing chamber for maintaining the wax (and other processing fluids) at the appropriate temperature when in that chamber.

The problem of maintaining homogeneity of wax (and other processing fluids) in the processing chamber of single chamber apparatus is typically addressed by transferring the wax (or other fluid) wholly or partly back to its reservoir and then returning it to the processing chamber, one or more times during the period of impregnation with wax or other fluid.

In accordance with the present invention, an apparatus as defined in claim 1 addresses these problems by the characteristic expedient of passing a stream of gas at an appropriate temperature through the wax in a container thereby to exchange heat and/or contaminants between the gas stream and the wax and/or to accomplish stirring thereof. The gas will usually be air but an inert gas may be appropriate in specific applications. Preferred embodiments of the apparatus are defined in dependent claims 2 to 9.

The container may be a vessel in which wax is held and to which specimens are transferred for impregnation, or it may be a reservoir in which wax is held for transfer to another vessel in which it is used for impregnation of specimens. Thus, in single chamber processing apparatus the characteristic expedient of the invention may be applied to either or both of the or each wax reservoir and also to the processing chamber itself. In such apparatus, the application of this expedient to the processing chamber can also serve for stirring other processing fluids while in the processing chamber.

Tissue processing fluids are mainly volatile and some are toxic and/or may contain toxic materials derived from tissue specimens with which they have been in contact. It is accordingly desirable to avoid the release of such fluids and/or their vapours into the environment and accordingly in preferred embodiments of the invention the gas stream is conducted through the wax container as part of a closed gas circuit. Such circuit, in addition to suitable gas pumping means and heat exchange means for controlling the temperature of the gas, preferably also contains means for extracting from the gas stream processing fluids and other contaminants that become entrained in the gas as a consequence of its passage through the said container.

Thus, the gas circuit may, for instance, include a liquid trap vessel connected to receive the gas exiting the wax container, an indirect heater to add heat to the gas upstream of its entry to the wax container, and a pump upstream of the heater and drawing gas from the liquid trap vessel. To improve efficiency and to aid condensation of contaminant vapours for capture in the liquid trap, a counter-current or other suitable heat exchanger may be arranged with one pass thereof upstream of the liquid trap and its other pass between the pump and the heater so that heat abstracted from the gas stream exiting the wax container is added to the gas upstream of the heater so as to diminish the load thereon.

In implementations of the invention in apparatus having two or more wax containers, the gas stream entries to the respective containers may be interconnected so that the gas stream flows concurrently through both or all containers in parallel branches of the gas circuit. However it is preferred to provide for selective connection of the respective containers into said circuit so as to minimise cross-contamination of the contents of the respective containers by carry-over of contaminants, in the gas streams exiting the containers, past the liquid trap, and/or to limit peak power demands.

Thus, in preferred embodiments, each wax container has its individual gas stream entry connected to the gas stream source - e.g. the outlet of the heater in the above described arrangement - through a selector valve which may be a multi-way valve serving both or all container gas stream entries or which may be an individual valve, the containers having a common gas return connection to the gas circuit.

In implementing the invention, the gas stream should be introduced into the wax container at a low level therein so as to maximise its contact with the wax before it exits the container. Preferably, the entry point for the gas stream is as low as possible and so chosen that in traversing the container the gas stream has the maximum stirring effect on the container contents by setting up circulation patterns that extend throughout the wax mass. However, when applied to a wax container that is to receive tissue specimens for processing, and also in the case of applying the invention to the processing chamber of a single chamber processing apparatus, the gas stream entry point should be so chosen as to avoid gas bubbles becoming trapped in or around the specimens. This may necessitate an appropriate disposition of the specimens within the container in conjunction with the choice of gas stream entry point.

Thus, for example, in the case of a single chamber processor apparatus with the invention applied to the processing chamber, the latter may be shaped so as to be symmetrical about a central vertical axis, the gas stream entry being located on this axis, preferably at the bottom of the chamber, so that the ascending gas bubbles induce symmetrical flow patterns rising axially and falling peripherally of the chamber, the tissue specimens being disposed around and radially offset from the said axis.

In the particular form of single chamber processing apparatus disclosed in EP-A-0 077 477, transfer of wax and other processing fluids between reservoirs and the processing chamber is accomplished by the application of an appropriate air pressure differential between the processing chamber and the respective reservoirs, the latter being connected to the processing chamber via a selector valve. When the contents of a reservoir have been transferred to the processing chamber by pressurisation of the reservoir, pressurisation of the reservoir is then held at an appropriate value to maintain the wax or other processing fluid in the processing chamber for the required period, whereafter the pressure differential is reversed to return the wax or fluid to its reservoir. The required pressure differentials are obtained by an air pump that is connected to a conduit connecting the head of the processing chamber with the heads of all the reservoirs and that is reversible or has reversible connections to the conduit. In implementing the invention in respect of the processing chamber of such apparatus, the said air pump could be arranged to provide the appropriate pressurisation of the heads of the reservoirs following transfer of the contents of one reservoir to the processing chamber so as to maintain air flow through the empty reservoir and its connection to the processing chamber, and thence through the latter to return to the pump. An alternative and presently preferred implementation, however utilises a separate pump to provide the said air flow in the same or a parallel circuit joining the head of the processing chamber to the heads of the reservoir.

Implementations of the invention for heating wax in a wax container may provide the sole means of supplying heat to the wax or may serve to supplement conventional electrical heating, being brought into use for melting an initial charge of solid wax particles and thereafter from time to time to effect stirring and/or decontamination of the molten wax. The conventional heating means, such as an electrical plate heater in the base of the container would then be employed to maintain the temperature of the molten wax, under thermostatic control, at times when the apparatus was on standby duty and at other times when high heat input, stirring and/or decontamination was not required.

The accompanying drawings illustrate the principles and some implementations of the invention, by way of illustration. In these drawings:
FIGURE 1 is a schematic section of a wax tank for a single chamber tissue processing apparatus;
FIGURE 2 illustrates a preferred gas circuit arrangement for implementing the invention in a wax tank as in Figure 1; and
FIGURE 3 illustrates the implementation of the invention in the processing chamber of a single chamber tissue processing apparatus.

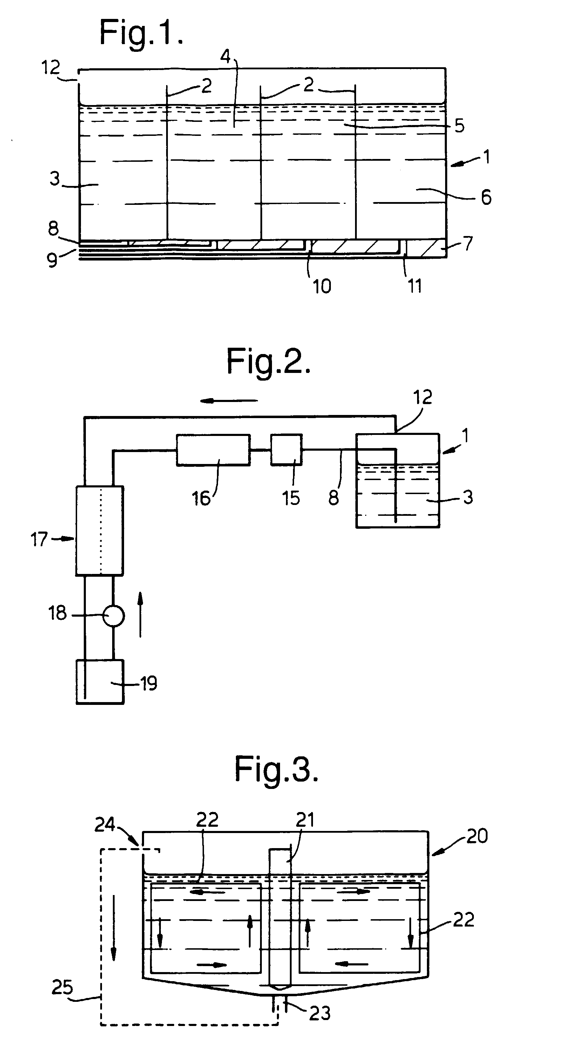

Figure 1 illustrates a wax tank 1 divided internally by partitions 2 into four discrete reservoirs 3, 4, 5 and 6, respectively, each intended to hold a charge of molten paraffin wax for transfer to the processing chamber of the apparatus as and when required in the processing of a batch of tissue specimens therein. The tissue processing apparatus itself is not illustrated, being in principle constructed and operating as disclosed in EP-A-0 077 477 and US-A-4 604 964. The processing chamber of the apparatus is, however, illustrated at 20 in Figure 3.

The tank 1 has a solid metal base 7 with fluid channels 8, 9, 10, 11 communicating with the respective reservoirs 3-6. Electrical heater elements (not shown) are provided in the base 7 with suitable thermostatic control temperature sensors and circuitry for maintaining the reservoir contents at a desired temperature when the apparatus is quiescent. The partitions 2 do not extend the full height of the tank 1, so that the reservoirs have a common head space connected to a gas port 12. In use, the tank 1 is sealed to enable the common head space to be subjected to increased or reduced pressure for transferring the reservoir contents between the reservoirs and the processing chamber as explained in EP-A-0 077 477. However, provision (not shown) is made for introducing a wax charge, in particulate solid form, into each reservoir when the apparatus is being commissioned.

In this embodiment, the fluid channels 8-11 serve both for transferring molten wax between the reservoirs and the processing vessel and for gas entry to the reservoirs in the implementation of the invention. However there could be duplicated channels 8-11, one set serving for wax transfer and the other for gas entry. The relevant connections of the channels 8-11 for wax transfer are not illustrated but may be assumed to be in principle as described in EP-A-0 077 477.

In the implementation of the invention, the fluid channels 8-11 of the tank 1 are individually connected to a multi-way valve 15 as diagrammatically illustrated for one of the reservoirs 3-6 in Figure 2. The valve 15 provides for selective connection of the reservoirs 3-6 to a closed gas circuit comprising an indirect heater 16, a counter-current heat exchanger 17, a pump 18 and a liquid trap vessel 19. By the operation of pump 18, gas (in this case air) is pumped from trap vessel 19 through one pass of the heat exchanger 17 and thence through the heater 16 and valve 15 to a selected one of the reservoirs 3-6, to flow upwardly through the wax charge (particulate solid or molten) therein and to exit the reservoir and the tank 1 through gas port 12. The gas port 12 is connected to the second pass of heat exchanger 17 and thence to the trap vessel 19.

In operation, gas enters the selected reservoir and flows upwardly through the wax charge therein, giving up heat thereto if the heater 16 is also in operation and at the same time creating circulatory flows in the wax (if molten) to stir this, and also stripping volatile contaminants from the wax. Gas exiting the reservoir passes through the heat exchanger where its gives up heat to the incoming pumped gas and is thereby cooled to promote condensation of contaminants that are trapped in vessel 19.

Thus, depending upon requirements, the circulating gas stream may supply heat to the wax charge and/or effect stirring of this to promote homogeneity thereof, and also strip contaminants from the wax so extending the effective useful life of the wax charge. The conventional heaters in the base of the tank 1 serve to maintain charge temperature in those reservoirs not in circuit with the gas stream at the time, or when the apparatus is quiescent and the pump 18 is not in use.

Figure 3 illustrates a convenient arrangement for implementation of the invention in the processing chamber 20 of the tissue processing apparatus As shown, the chamber 20 is symmetrical with respect to a central vertical axis, conveniently being circular in plan. A cylindrical insert 21 is disposed on the axis of the chamber to occupy space that cannot conveniently be utilised by tissue specimens, thereby to restrict the volume of the chamber to that useful for tissue processing and correspondingly to reduce the required processing fluid volume.

As illustrated baskets 22 are arranged around the insert 21 to contain tissue specimens for processing.

The chamber 20 has a central fluid inlet 23 in its base. This inlet may serve both for transfer of processing fluids (and wax) between their reservoirs and the chamber 20, and for implementation of the invention, or there may be duplicated inlets, the illustrated inlet 23 being reserved for implementation of the invention.

In the implementation of the invention, the gas circuit of Figure 2, or an equivalent ad hoc circuit, is preferably utilised to introduce gas (air), heated or at ambient temperature as appropriate, to the chamber 20 via inlet 23 so as to flow upwardly around the insert 21 and induce corresponding upward flow of the processing fluid or wax in the central region of the chamber; outboard of the central region, the fluid or wax will flow downwardly in a circulatory pattern indicated by the arrows in Figure 3. The gas exits the chamber 20 through a port 24. The gas circuit is indicated schematically at 25.

As an alternative to an ad hoc gas circuit, air circulation through the chamber in a manner equivalent to that described could be obtained by suitable operation of the pump used for transferring processing fluid or wax between the reservoirs and the chambers 20. However, the preferred air pump for producing the transfer pressure differentials is unsuitable for the duty cycle required in implementation of the invention and would ideally be supplemented or substituted by a pump appropriate to the duty cycle. Accordingly, it will generally be preferable to separate the functions of fluid and wax transfer, and gas flow through the processing chamber, respectively, by the use of an ad hoc gas circuit and pump for the latter duty.

## Claims

1. Apparatus suitable for use in the processing of histological samples by a process which includes embedding such samples in wax, the apparatus including a container (1) for such wax, characterised by at least one channel (8, 9, 10), for gas, opening into said container, in the region of the bottom of the container, means (18) for supplying gas through said channel (8, 9, 10) to the container and means (16, 17) for heating gas so supplied prior to its entry to the container.

2. Apparatus according to claim 1 and comprising a processing chamber (20), forming one said container, to which wax and other processing fluids are selectively transferred and a reservoir (1) for wax, forming another said container, each said container (1, 20) having an associated said channel (8, 25) for gas, opening into the container (1, 20) adjacent the bottom of the container, the apparatus including means for supplying gas through each said channel to the respective container and means for heating gas so supplied prior to its entry to the respective container.

3. Apparatus according to claim 1 or claim 2 including an exit (12, 24) for gas from the or each said container (1, 20) and means connecting said exit with said gas supplying means whereby said gas can be caused by said gas supply means to circulate in a closed circuit through the or each said container.

4. Apparatus according to Claim 3, in which said gas circuit comprises means (19) for extracting from the gas stream processing fluids and other contaminants entrained in the gas.

5. Apparatus according to Claim 4, in which said gas circuit includes a liquid trap vessel (19) connected to receive gas exiting the wax container, said means for heating gas comprises an indirect heater (16) to add heat to the gas upstream of its entry to the wax container (1), and said gas supply means includes a pump (18) upstream of the heater (16) and drawing gas from the liquid trap vessel (14).

6. Apparatus according to Claim 5, further characterised by a heat exchanger (17) having one pass upstream of said liquid trap (19) and a second pass between the pump (18) and the heater (16).

7. Apparatus according to any one of Claims 3 to 6, and having two or more containers, further characterised by means (15) for selective connection of each said container into said gas circuit.

8. Apparatus according to any preceding claim and including a said container (20) which is a processing chamber or vessel and which is symmetrical about a central vertical axis, said channel (25) opening into the container at a gas inlet (23) positioned on said axis, the apparatus including means (22) for locating tissue specimens around and radially offset from said axis.

9. Apparatus according to Claim 8, including a cylindrical insert (21) on said axis and above said gas inlet.

## Patentansprüche

1. Vorrichtung, geeignet zur Verwendung bei der Bearbeitung von histologischen Proben durch ein Verfahren, das Einbetten solcher Proben in Wachs enthält, wobei die Vorrichtung einen Behälter (1) für solches Wachs enthält, gekennzeichnet durch zumindest einen Kanal (8, 9, 10), für Gas, sich öffnend in besagten Behälter, in dem Bereich des Bodens des Behälters, ein Mittel (18) zum Zuführen von Gas durch besagten Kanal (8, 9, 10) zu dem Behälter und ein Mittel (16, 17) zum Aufheizen von Gas, das so zugeführt ist, bevor es in den Behälter eintritt.

2. Vorrichtung nach Anspruch 1, umfassend eine Bearbeitungskammer (20), bildend einen besagten Behälter, zu dem Wachs und andere Bearbeitungsflüssigkeiten wahlweise transferiert werden, und ein Reservoir (1) für Wachs, bildend einen anderen besagten Behälter, wobei jeder besagte Behälter (1, 20) einen assoziierten besagten Kanal (8, 25) für Gas aufweist, der sich in den Behälter (1, 20), benachbart zu dem Boden des Behälters, öffnet, wobei die Vorrichtung ein Mittel zum Zuführen von Gas durch jeden besagten Kanal zu dem entsprechenden Behälter und ein Mittel zum Aufheizen von so zugeführtem Gas, bevor es in den jeweiligen Behälter eintritt, enthält.

3. Vorrichtung nach Anspruch 1 oder 2, enthaltend einen Ausgang (12, 24) für Gas von dem oder jedem besagten Behälter (1, 20), und ein Mittel, verbindend besagten Ausgang mit besagtem Gaszufuhrmittel, wodurch besagtes Gas von besagtem Gaszufuhrmittel dazu gebracht werden kann, in einem geschlossenen Kreislauf durch den oder jeden besagten Behälter zu zirkulieren.

4. Vorrichtung nach Anspruch 3, in der besagter Gaskreislauf ein Mittel (19) zum Abziehen von Bearbeitungsflüssigkeiten und anderen Kontaminationen, eingeschlossen in dem Gas, aus dem Gas umfaßt.

5. Vorrichtung nach Anspruch 4, in der besagter Gaskreislauf ein Flüssigkeitsfallengefäß (19) enthält, verbunden, um Gas zu empfangen, das aus dem Wachsbehälter austritt, wobei besagtes Mittel zum Gasaufheizen einen indirekten Heizer (16), zum Hinzufügen von Wärme zu dem Gas stromaufwärts zu seinem Eingang zu dem Wachsbehälter (1), umfaßt, und besagtes Gaszufuhrmittel eine Pumpe (18) stromaufwärts des Heizers (16) enthält und Gas aus dem Flüssigkeitsfallengefäß (14) abzieht.

6. Vorrichtung nach Anspruch 5, ferner gekennzeichnet durch einen Wärmeaustauscher (17), der einen Durchgang stromaufwärts besagter Flüssigkeitsfalle (19) und einen zweiten Durchgang zwischen der Pumpe (18) und dem Heizer (16) aufweist.

7. Vorrichtung nach irgendeinem der Ansprüche 3 bis 6, aufweisend zwei oder mehrere Behälter, ferner gekennzeichnet durch eine Mittel (15) zum wahlweise Anschließen jedes besagten Behälters in besagtem Gaskreislauf.

8. Vorrichtung nach irgendeinem der vorangehenden Ansprüche, enthaltend einen besagten Behälter (20), der eine Bearbeitungskammer oder ein Bearbeitungsgefäß ist und symmetrisch um eine zentrale Vertikalachse ist, wobei besagter Kanal (25), der sich in den Behälter bei einem Gaseinlaß (23) öffnet, der auf besagter Achse angeordnet ist, und die Vorrichtung ein Mittel (22) zum Plazieren von Gewebeproben um besagte Achse und mit einem Radial-Offset zu derselben enthält.

9. Vorrichtung nach Anspruch 8, enthaltend einen zylindrischen Einsatz (21) auf besagter Achse und oberhalb besagten Gaseinlasses.

## Revendications

1. Dispositif convenant à l'utilisation pour le traitement d'échantillons histologiques par un procédé qui comprend les opérations consistant à enrober les échantillons dans de la cire, le dispositif comprenant un conteneur (1) pour la cire, caractérisé par au moins un canal (8, 9, 10) pour le gaz, débouchant dans le conteneur, dans la zone du fond du conteneur, des moyens (18) pour amener le gaz à travers le canal (8, 9, 10) au conteneur et des moyens (16, 17) pour chauffer le gaz ainsi alimenté avant son entrée dans le conteneur.

2. Dispositif selon la revendication 1 et comprenant une chambre de traitement (20), formant un conteneur, dans lequel sont sélectivement transférés la cire et autres fluides de traitement et un réservoir (1) pour la cire, formant un autre conteneur, chaque conteneur (1, 20) ayant un canal associé (8, 25) pour le gaz débouchant dans le conteneur (1, 20) contigu au fond du conteneur, l'appareil comprenant des moyens pour amener du gaz à travers chaque canal au conteneur respectif et des moyens pour chauffer le gaz ainsi amené avant son entrée dans le conteneur respectif.

3. Dispositif selon la revendication 1 ou 2, comprenant une sortie (12, 24) pour le gaz à partir du ou de chaque conteneur (1, 20) et des moyens raccordant la sortie avec les moyens d'alimentation de gaz de sorte que le gaz peut être mis en circulation par les moyens d'alimentation de gaz dans un circuit fermé à travers le ou chaque conteneur.

4. Dispositif selon la revendication 3, dans lequel le circuit de gaz comprend des moyens (19) pour extraire à partir du courant gazeux des fluides de traitement et autres contaminants entraînés dans le gaz.

5. Dispositif selon la revendication 4, dans lequel le circuit de gaz comprend un siphon liquide (19) raccordé pour recevoir le gaz sortant du conteneur de cire, les moyens pour chauffer le gaz comprennent un élément de chauffage indirect (16) pour ajouter de la chaleur au gaz en amont de son entrée dans le conteneur de cire (1), et les moyens d'alimentation de gaz comprennent une pompe (18) en amont de l'élément de chauffage (16) et prélevant le gaz du siphon liquide (14).

6. Dispositif selon la revendication 5, caractérisé par un échangeur de chaleur (17) comportant un passage en amont du siphon liquide (19) et un second passage entre la pompe (18) et l'élément chauffant (16).

7. Dispositif selon l'une quelconque des revendications 3 à 6, comportant deux ou plus de deux conteneurs, caractérisé de plus par des moyens (15) pour le raccord sélectif de chaque conteneur dans le circuit de gaz.

8. Dispositif selon l'une quelconque des revendications précédentes, comprenant un conteneur (20) qui est une chambre de traitement ou un récipient et qui est symétrique sur un axe central vertical, le canal (25) débouchant dans le conteneur au niveau d'une entrée de gaz (23) positionnée sur l'axe, l'appareil comprenant des moyens (22) pour positionner les échantillons tissulaires autour de cet axe et décalés radialement par rapport à celui-ci.

9. Dispositif selon la revendication 8, comprenant un insert cylindrique (21) sur cet axe et au-dessus de l'entrée de gaz.
